# DEMANDE DE BREVET EUROPEEN

(11) **EP 3 421 877 A1**
(43) Date de publication de la demande: **02.01.2019**
(21) Numéro de dépôt: 18179447.0
(22) Date de dépôt: 25.06.2018
(51) Int. Cl.: F21S 43/237, G02B 6/08, F21S 43/27, F21S 43/251

(54) **ELÉMENT LUMINEUX ÉTANCHE POUR PIÈCE DE CARROSSERIE DE VÉHICULE**

(30) Priorité: 30.06.2017 FR 1756195
(71) Demandeur: Compagnie Plastic Omnium, 69007 Lyon (FR)
(72) Inventeur: KHAYAT, Issam, 69001 LYON (FR); BRIZIN, Jérôme, 01100 ARBENT (FR)
(74) Mandataire: LLR

(57) **Abrégé**

- L'invention concerne un élément lumineux (100) pour pièce de carrosserie de véhicule caractérisé en ce qu'il comporte :
- un substrat (200) à base de matière polymère apte à fixer l'élément lumineux (100) sur une pièce de carrosserie ;
- une nappe de fibres optiques (300) comportant une zone active (310) qui diffuse la lumière ; et
- un élément de transparence (400) apte à laisser passer au moins partiellement la lumière issue de la zone active (310) de la nappe de fibres optiques (300) ;
- le substrat (200) et l'élément de transparence (400) encapsulant de façon étanche la zone active (310) de la nappe de fibres optiques (300)

## Description

L'invention a pour objet un élément lumineux pour pièce de carrosserie de véhicule automobile, et plus particulièrement une pièce destinée à contribuer à l'aspect général des pièces de carrosserie des véhicules

Ces pièces de style ou ces éléments de carrosserie ont pour objet de rehausser une ligne ou de souligner une forme dans le but de renforcer l'image que le constructeur souhaite associer à son modèle de véhicule.

A titre d'exemple, les baguettes chromées courant le long de la partie latérale du véhicule, les protections de bas de caisse, le logo de la marque, les enjoliveurs de poignées de porte, les coques de rétroviseurs sont ces pièces de style dont le design fait l'objet d'un soin particulier de la part des concepteurs du véhicule. Par extension, toutes les pièces de la carrosserie visibles de l'extérieur et participant à l'aspect général du véhicule, telles qu'un ouvrant, un parechoc, une calandre, peuvent être considérées également comme des éléments de carrosserie ou des pièces de style entrant dans le champ d'application de l'invention.

Dans le but de renforcer l'effet produit par ces éléments de carrosserie il a été proposé de placer une source lumineuse derrière une surface de l'élément de carrosserie formée d'un matériau transparent.

Actuellement, la plupart de ces éléments lumineux comportent des sources lumineuses placées directement sous la surface transparente. On peut par exemple retrouver des dispositifs lumineux comprenant des sources de lumière disposées dans des cavités pratiquées dans un corps diffusant. Lorsque la source lumineuse est allumée, la lumière traverse l'élément transparent et l'élément tout entier est illuminé. Lorsque la source lumineuse est éteinte, l'élément garde une apparence extérieure très similaire à celle du reste de la carrosserie.

Ces éléments de carrosserie lumineux présentent toutefois l'inconvénient de comporter des sources de lumière disposées directement dans la partie arrière de la surface formant la peau de l'élément de carrosserie. Les sources de lumières sont alors exposées aux chocs et aux conditions climatiques externes subies par l'élément de carrosserie proprement dit. Il est alors nécessaire de prévoir un encapsulage adapté de manière à assurer la protection de la source de lumière, et un dispositif optique particulier pour distribuer la lumière de manière uniforme à la surface externe de l'élément de carrosserie.

Une autre solution consiste à délocaliser la source de lumière en la remplaçant par un guide de lumière diffusant raccordé à une source de lumière étant située dans une partie de la carrosserie située à l'abri des agressions externes. Dans un tel dispositif, le guide de lumière est situé entre un corps transparent et un support rigide que l'on insère dans un logement prévu à cet effet dans la pièce de carrosserie.

Ces éléments de carrosserie donnent pleine satisfaction aux constructeurs mais présentent néanmoins l'inconvénient de devoir préparer un support rigide qui soit parfaitement adapté au logement présent dans la pièce de carrosserie. Ainsi, il est plus difficile d'adapter cette solution à tous types de logements de manière aisée.

Une dernière solution consiste à coller le guide de lumière avec un adhésif double face directement entre le support et le guide lumière.

Les inconvénients de cette solution sont qu'aucune étanchéité n'est assurée autour du guide de lumière, et que l'adhésion entre l'adhésif double face et le guide est mauvaise, en raison de la rugosité de la nappe de fibres optiques qui constitue le guide. De plus, le guide lumière se retrouve « à nu » sur sa face interne, donc non protégé des salissures et de l'eau.

L'invention a pour objet de s'affranchir des inconvénients évoqués précédemment.

L'élément lumineux pour pièce de carrosserie de véhicule selon l'invention comporte un substrat à base de matière polymère apte à fixer l'élément lumineux sur une pièce de carrosserie, une nappe de fibres optiques comportant une zone active qui diffuse la lumière, et un élément de transparence apte à laisser passer au moins partiellement la lumière issue de la zone active de la nappe de fibres optiques ; le substrat et l'élément de transparence encapsulant de façon étanche la zone active de la nappe de fibres optiques.

L'encapsulage de la zone active de la fibre optique qui conduit la lumière permet de garantir l'étanchéité autour de la zone active et donc de remédier à l'inconvénient précité.

Dans une telle disposition, la partie active de la nappe de fibres optiques est prise en sandwich entre le substrat et l'élément de transparence. Le substrat et l'élément de transparence sont en contact direct de façon continue soit sur tout le tour de la partie active de la nappe de fibres optiques, soit sur tout le tour à l'exception de la zone par laquelle la nappe sort de l'élément lumineux. De cette manière, celle-ci est efficacement encapsulée entre ces éléments. Ainsi, l'étanchéité de l'espace contenant la zone active de fibres optiques est assurée. Celle-ci est notamment protégée des conditions climatiques extérieures.

L'assemblage de l'élément lumineux selon l'invention est aussi beaucoup plus aisé qu'avec les dispositifs de l'art antérieur.

D'une part, le substrat, de par sa flexibilité, présente l'avantage de pouvoir s'adapter très facilement au relief sur lequel l'élément lumineux est fixé. Ainsi, quelle que soit la forme du logement, (ou de la pièce de carrosserie si celle-ci ne comporte pas de logement), l'élément lumineux s'adapte au mieux à cette forme. Le substrat permet en outre de combler un éventuel jeu présent entre l'élément lumineux et la pièce de carrosserie du véhicule.

Dans la présente description, on entend généralement par nappe de fibres optiques un ensemble de fibres comprenant des fibres optiques pouvant être insérées à travers des mailles d'un tissu. Ces fibres optiques sont généralement raccordées à une source lumineuse, telle qu'une ou plusieurs diodes. Ces fibres optiques peuvent être éclairées à partir de l'une ou de chacune de leurs extrémités jouant le rôle de portion d'alimentation, afin de rendre lumineuse la partie active de la nappe de fibres optiques correspondante.

La réalisation de la partie active de la nappe de fibres optiques peut faire appel à des technologies différentes et connues en tant que telles. Une première technique consiste à traiter la surface de la fibre considérée comme la surface de sortie, de manière à la rendre rugueuse. Les rugosités sont alors autant de surfaces réfléchissantes permettant à une partie de la lumière de s'échapper de la fibre vers l'extérieur. Cette technologie est peu onéreuse, et s'avère très efficace pour des guides de lumière diffusants des longueurs pouvant aller jusqu'à 3m. Elle permet également de ne rendre diffusante que la seule partie de la fibre servant à l'éclairage. Une autre technologie consiste à doper le matériau formant la fibre optique à l'aide de particules réfléchissantes de taille microscopique. Cette technologie permet de rendre plus uniforme la diffusion de la lumière.

L'élément lumineux peut en outre comporter l'une ou plusieurs des caractéristiques suivantes, prises seules ou en combinaison.
- le substrat est apte à épouser un relief de pièce de carrosserie sur lequel l'élément lumineux est destiné à être fixé. De cette manière, le substrat encapsule de manière optimale la zone active de la nappe de fibres optiques contre l'élément de transparence. Ainsi, tout l'élément lumineux épouse la pièce de carrosserie sur laquelle il est fixé.
- le substrat possède une propriété de conformabilité. Par conformabilité on entend la capacité d'adaptation du substrat aux différentes déformations pouvant se produire. Par exemple, lors de l'assemblage de l'élément lumineux, on colle la nappe sur le substrat puis on colle ce substrat sur l'élément de transparence. Ainsi, le substrat doit s'adapter aux déformations pouvant se produire au moment de cette application sans se dégrader, notamment en épousant la forme de la nappe contre l'élément de transparence. En d'autres mots, le substrat est drapable. Ainsi il a la capacité à épouser une forme (notamment celle de la nappe de fibres optiques sur l'élément lumineux) sans générer de plis (par excès de matière), ou sans générer d'étirement (par manque de matière).
- la matière polymère est choisie seule ou en combinaison parmi les matières suivantes : une mousse, un élastomère, une matière polymère chargée d'élastomère, une feuille métallique.
- le substrat à base de matière polymère possède une épaisseur telle que le substrat est apte à s'adapter à un relief de pièce de carrosserie sur lequel l'élément lumineux est destiné à être fixé. Une épaisseur adéquate du substrat est indispensable à une bonne adaptation géométrique de celui-ci sur l'élément de carrosserie.
- le substrat comprend une couche adhésive qui est disposée en regard de l'élément de transparence. De cette manière, l'adhésion entre le substrat et l'élément de transparence est assurée. De fait, cette caractéristique renforce l'étanchéité autour de la nappe de fibre optique.
- Le substrat comporte un logement accueillant la zone active de la nappe de fibres optiques, l'élément de transparence étant en contact avec le substrat sur des bords du logement. Ce logement peut être un résultat de la compression du substrat autour de la nappe. Ainsi, la zone active de la fibre optique est encapsulée de manière optimale entre le substrat et l'élément de transparence. Ce logement peut aussi être aménagé directement dans le substrat, afin d'accueillir la zone active de la nappe de fibre optique. Cette disposition est particulièrement avantageuse dans le cas où le substrat comprend une matière polymère d'épaisseur fine, car cette matière n'est pas aussi élastique qu'une mousse ou un élastomère.
- La nappe de fibres optiques comporte en outre de la zone active une zone passive qui guide la lumière, et une connectique permettant de relier la zone passive à une source lumineuse. De cette façon, la lumière est efficacement guidée de la source lumineuse vers la zone active diffusant la lumière par la zone passive de la nappe de fibres optiques. Astucieusement, cela permet de placer la source lumineuse à distance de la surface extérieure d'une pièce de carrosserie sur laquelle l'élément lumineux serait fixé. Ainsi, lorsque la pièce de carrosserie subit un choc externe, la source lumineuse est préservée. Ainsi, et en comparaison avec un bloc optique classique qui nécessite souvent un changement complet du bloc en cas de choc, il n'est ici besoin que de changer la partie extérieure de l'élément lumineux.
- La zone passive forme un toron. De cette façon, il est très aisé de faire emprunter à la zone passive de la nappe de fibres optiques un chemin orienté en trois dimensions. Ainsi, la pose de l'élément est grandement facilitée sur des pièces de carrosserie comportant une forme anguleuse. Le toron est apte à suivre un chemin, même sinueux, allant de la partie active de la nappe de fibres optiques à la source lumineuse. Cette disposition est particulièrement avantageuse lorsque la source est située en un point éloigné de la partie active de la nappe de fibres optiques.
- La nappe de fibres optiques comporte une zone de transition entre la zone active d'une part et le toron d'autre part. Dans cette zone, les fibres optiques se rassemblent progressivement afin de terminer entremêlées de manière compacte en formant le toron. Cette disposition fournit une zone optimale autour de laquelle l'étanchéité de l'encapsulage de la partie active de la nappe de fibres optiques est réalisée.
- Le toron et la zone de transition sont entourés d'une gaine, par exemple une gaine thermorétractable. Avantageusement, cette gaine maintient le toron en forme. Elle maintient aussi la zone de transition en forme. De plus, quand la fermeture de la zone encapsulée est réalisée autour de la zone de transition, cela permet d'assurer une meilleure étanchéité car l'adhésion du substrat et de l'élément de transparence est facilitée au niveau de la gaine.

L'invention a également pour objet un ensemble d'une pièce de carrosserie pour véhicule et d'un élément lumineux tel que décrit précédemment, dans lequel l'élément de transparence est fixé sur la pièce de carrosserie et le substrat fixe la nappe de fibres optiques sur l'élément de transparence. Avantageusement, cela permet un assemblage aisé de l'élément lumineux sur la pièce de carrosserie. Ainsi, dans un procédé de fabrication industrialisé, on vient fixer l'élément de transparence sur la pièce de carrosserie, par exemple dans un logement situé sur une surface externe de l'élément de carrosserie. Ensuite, la nappe de fibres optiques, déjà encollée sur le substrat, est appliquée sur l'élément de transparence. L'adhérence du substrat sur l'élément de transparence permet donc une bonne fixation de la nappe et du substrat sur l'élément de transparence, et donc de l'élément lumineux sur la pièce de carrosserie. On peut ajouter que l'élément, de par sa structure, peut ainsi s'adapter à toutes sortes de géométries de pièces de carrosserie car il peut facilement épouser toutes sortes de formes, qu'elles soient par exemple concaves, convexes ou bien anguleuses. De plus le substrat permet de reprendre des jeux éventuels qui seraient présents entre l'élément lumineux et la pièce de carrosserie. Avantageusement, le substrat possède une rigidité suffisante pour être compressée contre la pièce de carrosserie lors d'un procédé de fabrication industrialisé et automatisé.

Avantageusement, le substrat comprend une seconde couche adhésive disposée à la surface opposée à la nappe de fibres optiques dudit substrat en regard de la pièce de carrosserie. Cette caractéristique permet d'améliorer encore la fixation de l'élément lumineux sur la pièce de carrosserie. Ainsi, selon cette disposition, on fixe cette fois l'élément lumineux par la face opposée à l'élément de transparence.

L'invention sera mieux comprise à la lecture des figures annexées, qui sont fournies à titre d'exemple et ne présentent aucun caractère limitatif, dans lesquelles :
- La figure 1 est une vue en perspective d'un élément lumineux suivant un premier mode de réalisation.
- la figure 2 est une vue en perspective d'une nappe de fibres optiques destinée à un élément lumineux suivant un deuxième mode de réalisation.
- La figure 3 est une vue en coupe a-a de la nappe de fibres optiques de la figure 2.
- La figure 4 est une vue en coupe b-b de la nappe de fibres optiques de la figure 2.
- La figure 5 est une vue en coupe c-c de la nappe de fibres optiques de la figure 2.
- La figure 6 est une vue en coupe a-a de l'élément lumineux suivant le deuxième mode de réalisation comportant la nappe de fibres optique de la figure 2.
- La figure 7 est une vue de dessous du substrat de l'élément lumineux de la figure 6.
- La figure 8 est une vue en coupe d-d de l'élément lumineux de la figure 6.
- La figure 9 est une vue en coupe longitudinale d'un élément lumineux suivant un troisième mode de réalisation.
- La figure 10 est une vue en perspective d'une nappe de fibres optiques encollée sur une mousse adhésive en rouleau.

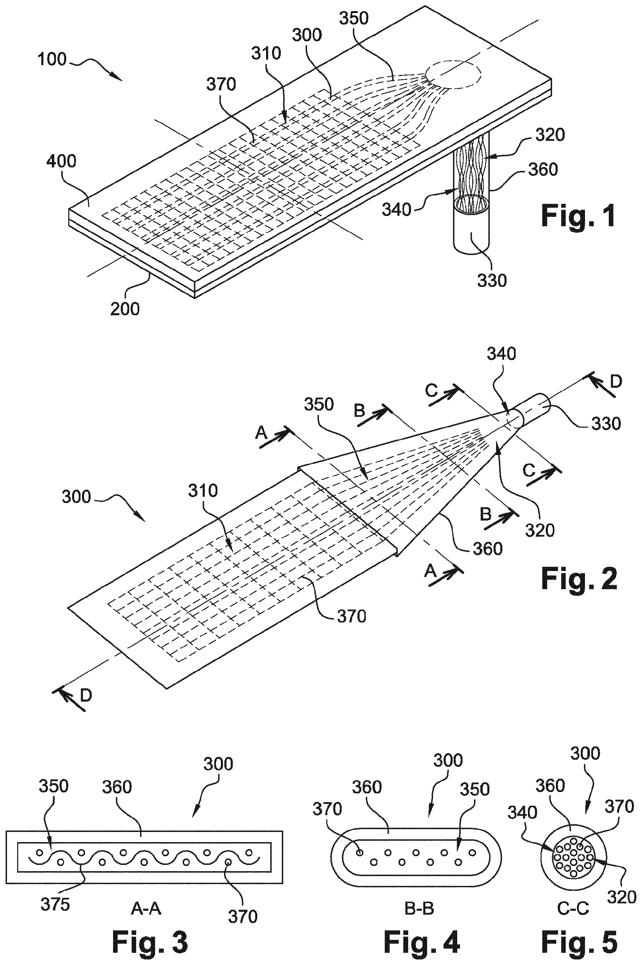

On a illustré en perspective sur la figure 1 un élément lumineux pour pièce de carrosserie de véhicule selon un mode de réalisation. L'élément lumineux 100 comporte un substrat 200, un élément de transparence 400 et une nappe de fibres optiques 300 encapsulée de manière étanche entre le substrat 200 et l'élément de transparence 400.

Cet élément lumineux 100 est conçu pour être posé sur une pièce de carrosserie de véhicule. Principalement sur des pièces extérieures telles que les baguettes chromées courant le long de la partie latérale du véhicule, les protections de bas de caisse, le logo de la marque, les enjoliveurs de poignées de porte, ou bien les coques de rétroviseurs. Cette liste n'est pas limitative et l'élément lumineux peut se placer sur d'autres éléments de carrosseries du véhicule.

La nappe de fibres optiques 300 constituée ici d'une pluralité de fibres optiques 370 est encapsulée dans l'élément lumineux. Elle comprend plusieurs parties différentes. Tout d'abord, une connectique 330 qui est apte à être reliée à une source lumineuse non représentée qui permet l'alimentation en lumière de la nappe 300. Ensuite, une zone passive 320 qui permet la conduction de la lumière vers une zone active 310. La zone passive 320 forme ici un toron 340. On entend par toron une zone où les fibres 370 sont rassemblées de manière compacte, afin de former un agencement de section circulaire. Dans la zone active 310, les fibres 370 sont organisées en nappe de forme plane. Les fibres 370 font dans ce mode de réalisation partie d'un tissu. Ce tissu facilite la manipulation de la nappe préalablement au collage de celle-ci sur le substrat 200. La zone active 310 de la nappe de fibres optiques 300 est apte à diffuser la lumière qui lui parvient de la zone passive 320 de la nappe 300. C'est donc cette partie qui va émettre la lumière de l'élément lumineux 100. La nappe 300 forme une zone de transition 350 entre le toron 340 et la zone active 310. Dans cette zone de transition 350, les fibres 370 se rassemblent progressivement depuis la zone active 310 vers le toron 340. Une gaine 360 entoure la nappe 300 depuis la zone de transition 350, dans la partie où celle-ci est encore encapsulée entre le substrat 200 et l'élément de transparence 400, jusqu'à la connectique de la nappe 330, en entourant au passage le toron 340.

L'élément lumineux 100 est constitué successivement d'une mousse 210, rendue adhésive par la présence d'une couche adhésive (non représentée ici) à sa surface, non rigide, qui forme le substrat 200, d'une nappe de fibres optiques 300 telle que décrite précédemment, et d'un élément de transparence 400. La mousse adhésive 210 est une mousse compressible percée d'une ouverture 380 qui est ici une fente (non représentée sur cette figure) qui permet le passage de la zone de transition 350 de la nappe de fibres optiques 300. La mousse a une épaisseur comprise de préférence entre 1 et 3 millimètres. La couche adhésive est disposée sur la surface de la mousse en regard de l'élément de transparence 400 et de la zone active de la nappe de fibres optiques 310.

L'élément de transparence 400 est placé en surface de l'élément de carrosserie (non représenté). Cet élément 400 est apte à laisser passer la lumière émise par la partie active de la nappe de fibres optiques 310.

Dans ce mode de réalisation, le substrat 200 et l'élément de transparence 400 sont en contact direct et adhèrent de façon continue sur tout le tour de la zone active 310 de la nappe de fibres optiques 300. La fente 380 du substrat 200 englobe quant à elle la gaine 360 à l'endroit où la nappe sort de la partie encapsulée de la nappe 300. La mousse 210 adhère par l'intermédiaire de la couche adhésive à la gaine 360 sur tout le tour de la fente 380.

Cette disposition de l'élément lumineux 100 permet une bonne encapsulation de la partie active de la nappe 310. Ainsi, l'étanchéité de la partie encapsulée de la nappe 300 est assurée. Celle-ci est particulièrement étanche à l'eau, mais peut aussi permettre une étanchéité à d'autres substances.

L'élément lumineux 100 est apte à adhérer sur une pièce de carrosserie, par exemple par l'intermédiaire de l'élément de transparence 400 qui est fixé sur celle-ci. Ainsi, l'élément de transparence 400 est fixé sur la pièce de carrosserie, par exemple dans un logement ou une ouverture pratiquée dans la pièce. Ensuite, on vient coller le substrat 200, sur lequel a été collée précédemment la nappe de fibres optiques 300, sur l'élément de transparence 400. Ainsi, l'élément lumineux tout entier est fixé sur la pièce de carrosserie.

De plus, de par la nature flexible des différents constituants de l'élément lumineux 100, celui-ci est apte à épouser la forme de la pièce de carrosserie, que celle-ci soit concave, convexe, ou présente des parties anguleuses. Ainsi, et de manière avantageuse, un même élément lumineux 100 peut s'adapter à plusieurs logements de pièces de carrosseries de formes différentes.

Grâce à cette disposition, la source de lumière peut être placée à distance de la surface extérieure de la pièce de carrosserie. Ainsi, lors d'un choc extérieur du véhicule, la source lumineuse est épargnée. Ainsi, il n'y a pas besoin de la changer, ce qui diminue les coûts de réparation.

On peut noter que la forme en toron 340 de la zone passive 320 est particulièrement avantageuse car elle permet une évolution de la nappe dans toutes les directions de l'espace. Ainsi, elle peut suivre un chemin, même tortueux, aménagé dans la pièce de carrosserie, ou d'autres pièces du véhicule, entre l'endroit où est disposé l'élément lumineux et celui où est placée la source lumineuse. De plus, cette forme de toron permet de transmettre la lumière sur une plus grande distance qu'avec une nappe classique. Ainsi, la source de lumière peut se situer à une distance pouvant aller jusqu'à trois mètres de la zone active de la nappe de fibres optiques 310, contrairement à une distance de l'ordre de 45 centimètres habituellement.

La figure 2 est une vue en perspective d'une nappe de fibres optiques pour élément lumineux selon l'invention. Ces éléments ne seront pas présentés à nouveau ici.

Cette nappe 300 comporte les mêmes éléments que ceux de la nappe présente en figure 1.

A la différence de la nappe de la figure 1, ici la gaine 360 entoure tout le toron 340, ainsi que toute la zone de transition 350 et s'arrête au début de la zone active 310 de la nappe.

La figure 3, qui est la vue suivant coupe a-a de la figure 2, illustre l'organisation des fibres optiques 370 au début de la zone de transition 350. On peut voir que les fibres sont ici disposées telles qu'elles adoptent encore une forme plane dans leur globalité, qui est similaire à celle de la zone active de la nappe 310, avec la chaîne ou la trame du tissu 375 qui maintient ces fibres en position. Ici, la gaine 360 englobe la nappe 300 sur tout son contour.

La figure 4, qui est la vue suivant coupe b-b de la figure 2, illustre l'organisation des fibres optiques 370 au milieu de la zone de transition 350. On peut voir qu'il n'y a plus de chaîne ou de trame de tissu et que les fibres commencent ici à se rassembler et à s'enchevêtrer pour se rapprocher de la forme qu'aura le toron 340. Ici, la gaine 360 englobe la nappe 300 sur tout son contour.

La figure 5, qui est la vue suivant coupe b-b de la figure 2, illustre l'organisation des fibres optiques 370 à la limite de la zone de transition 350 et du toron 340. Ici, les fibres sont complètement enchevêtrées et la section de la nappe est circulaire. Ici, la gaine 360 englobe la nappe 300 sur tout son contour. Lorsqu'elle emprunte cette forme de toron, la nappe 300 est apte à s'étendre dans n'importe quelle direction de l'espace, comme nous l'avons décrit précédemment.

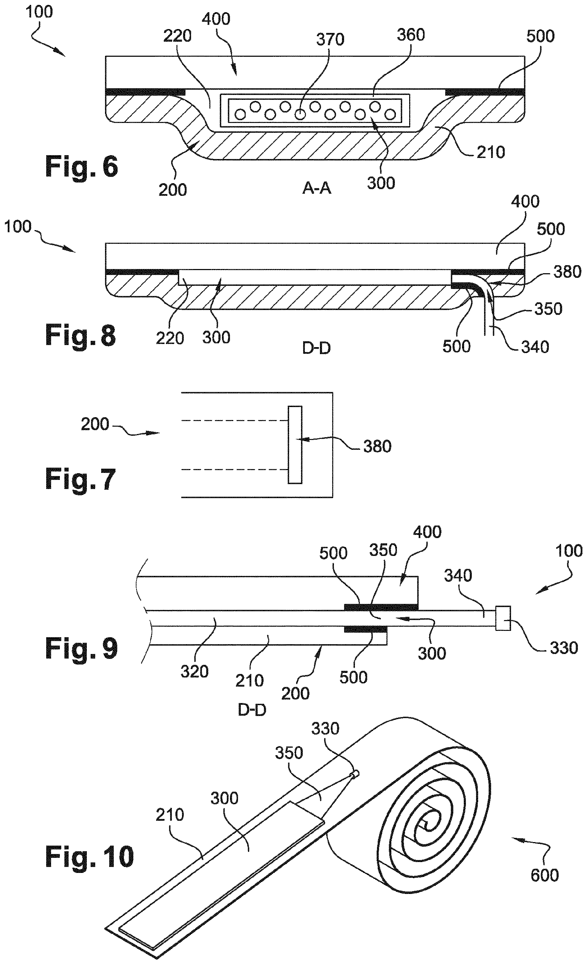

La figure 6 est une coupe suivant le plan a-a de la nappe de la figure 2, mais cette fois intégrée dans l'élément lumineux 100.

Ici, la nappe de fibre 300 est encapsulée entre le substrat 200 d'une part et l'élément de transparence 400 d'autre part. Le substrat 200 forme ici un logement 220 autour de la nappe 300 afin de l'encapsuler. Le substrat 200 est en contact avec l'élément de transparence 400 sur les bords de la nappe 300, et ce sur tout le contour de la zone active de la nappe de fibres optiques 310. Le substrat comporte une couche adhésive 500 disposée en regard de l'élément de transparence 400. Cette couche peut par exemple être un adhésif double face. Le substrat 200 comporte aussi une mousse 210 qui encapsule la nappe de fibres optiques 300.

Cette disposition permet d'assurer l'étanchéité de la zone encapsulée contenant la zone active de la nappe de fibres optiques 300 en empêchant une substance, par exemple de l'eau, venant de l'extérieur de pénétrer par l'interface entre le substrat 200 et l'élément de transparence 400.

La figure 7 est une vue de dessous du substrat. Cette vue présente une fente 380 dans la mousse adhésive 210 permettant le passage de la zone de transition de la nappe 350 dans la mousse. C'est préférentiellement au niveau du plan de coupe A-A de la figure 2 que la nappe passe dans la fente 380, qui est aussi longue que la nappe est large à cet endroit. La nappe est entourée de la gaine 360 à cet endroit.

La sortie de la nappe 300 par une fente 380 de même taille que la nappe permet une bonne encapsulation de celle-ci. La fente épouse et suit complètement la forme de la nappe 300, et adhère à la gaine 360. Cette structure assure une bonne étanchéité de la partie encapsulée de l'élément lumineux 100 au niveau de la sortie de la nappe 300.

La figure 8 est une vue en coupe suivant le plan D-D (visible en figure 2) de l'élément lumineux 100 de la figure 6. On peut voir sur cette vue que la fente 380 entoure la nappe 300. Une couche adhésive 500 est disposée entre la mousse adhésive 210 et la zone de transition 350 de la nappe au niveau de la fente 380. On peut noter qu'au niveau de cette zone, la nappe 300 est encore entourée de gaine 360.

Ainsi, l'étanchéité est assurée au niveau de la sortie de la nappe 300 de la zone encapsulée de l'élément lumineux 100 car la mousse épouse la forme de la nappe et adhère sur celle-ci.

La figure 9 est une coupe suivant le plan D-D de la figure 2 d'un élément lumineux suivant un autre mode de réalisation de l'invention.

Ce mode de réalisation diffère uniquement du mode de réalisation précédent en ce que le substrat 200 ne présente ici pas de fente pour le passage de la nappe 300. Ainsi, au niveau de la sortie de la nappe 300 de la zone encapsulée, celle-ci est en contact avec l'élément de transparence 400 en dessus et avec le substrat 200 en dessous et sur les côtés de la nappe. Une couche adhésive 500 est disposée entre la nappe 300 et l'élément de transparence 400 d'une part, et entre la nappe et la mousse 210 d'autre part.

Ainsi, le substrat 200 est en contact avec l'élément de transparence 400 sur tout le contour de la nappe 300, à l'exception du bord par lequel la zone de transition 350 d'étend pour ensuite devenir le toron 340.

Le substrat 200 forme un logement 220 autour de la nappe 300 qui épouse la forme de celle-ci. L'étanchéité au niveau de la sortie de la nappe de la zone encapsulée est assurée par l'adhérence de la mousse 210 sur la gaine 360 de la nappe 300 et sur l'élément de transparence 400 d'une part, et par l'adhérence entre la gaine 360 et l'élément de transparence d'autre part.

La fabrication de l'élément lumineux 100 selon ce mode de réalisation est facilitée par le fait qu'elle ne nécessite pas l'aménagement d'une fente dans le substrat dans laquelle on viendrait glisser la nappe 300 ; le nombre d'étapes de fabrication est donc diminué.

La figure 10 est une vue en perspective d'un rouleau de mousse adhésive 600 sur laquelle est collée une nappe de fibre optiques 300.

Cette figure présente une étape particulière de la fabrication d'un élément lumineux 100 selon l'invention. A cette étape on vient coller la nappe 300 sur le rouleau de mousse adhésive 500. Ensuite, on découpe la nappe à la longueur souhaitée afin de venir la coller ensuite sur un élément de transparence 400 non représenté ici. Il est possible de découper une fente 380 dans la mousse au niveau de la zone de transition de la nappe 350, pour obtenir un élément lumineux comme celui présenté en figure 6 à 8. On peut aussi simplement découper la mousse sans y faire de fente pour obtenir un élément lumineux 100 comme celui de mode réalisation présenté en figure 9.

Ainsi, si l'on adapte la taille de la nappe 300, on peut facilement obtenir des éléments lumineux 100 de tailles différentes. De même, la flexibilité du dispositif et la capacité de la mousse à rattraper les jeux situés entre une pièce de carrosserie et l'élément lumineux 100 rendent l'élément très facile à adapter à une pièce de carrosserie. On est ainsi apte, avec un nombre réduit de pièces, à réaliser un élément lumineux 100 pouvant s'adapter à une grande variété de formes de pièces de carrosserie.

L'invention n'est pas limitée aux modes de réalisation présentés et d'autres modes de réalisation apparaîtront clairement à l'homme du métier.

Une seconde couche adhésive peut par exemple être disposée sur la mousse adhésive. Cette couche est ainsi disposée sur la face de la mousse qui est opposée à la nappe de fibres optiques. Cette disposition permet une meilleure adhérence de l'élément lumineux sur la pièce de carrosserie.

Il est aussi possible que l'ouverture permettant le passage de la nappe à travers le substrat soit en forme de trou rond ou oblong, au lieu d'être en forme de fente comme présenté dans les figures. Ainsi, on adapte la forme de l'ouverture à la forme de la nappe au moment du passage de celle-ci à travers l'ouverture.

Le substrat peut aussi comporter, à la place ou en plus de la mousse, un élastomère, une matière polymère chargée d'élastomère. Dans ce cas et dans celui ou le substrat est constitué de mousse, il peut avantageusement avoir une épaisseur comprise entre 1 et 3 millimètres.

Le substrat peut aussi comporter, à la place ou en plus de la mousse, une feuille métallique. Cette feuille métallique peut préférentiellement avoir une épaisseur inférieure à 0,5 millimètres. Cette feuille est apte à épouser le relief d'une pièce de carrosserie.

Selon un autre mode réalisation de l'invention, le substrat peut avantageusement dépasser sur les bords de l'élément de transparence. Ainsi, le substrat adhère à la fois sur l'élément de transparence et sur la pièce de carrosserie sur lequel l'élément est fixé. Cette disposition renforce l'adhérence de l'élément lumineux sur la pièce de carrosserie.

Selon un autre mode de réalisation de l'invention, l'élément lumineux est apte à adhérer à une pièce de carrosserie de véhicule par l'intermédiaire de la surface du substrat qui n'est pas en contact avec la nappe de fibres optiques. Le substrat étant compressible, il s'adapte de manière optimale à la surface de l'élément de carrosserie sur laquelle il est posé. Ainsi, il peut rattraper des jeux éventuels entre l'élément lumineux 100 et la surface de la pièce de carrosserie sur laquelle l'élément lumineux est posé.

### Liste des références :

- 100: : Elément lumineux pour pièce de carrosserie
- 200: : Substrat
- 210: . Mousse
- 220: : Logement du substrat
- 300: : Nappe de fibres optiques
- 310: : Zone active de la nappe de fibres optiques
- 320: : Zone passive de la nappe de fibres optiques
- 330: : Connectique de la nappe de fibres optiques
- 340: : Toron
- 350: : Zone de transition de la nappe de fibres optiques
- 360: : Gaine
- 370: : Fibre optique
- 375: : Chaîne ou trame de tissu
- 380: : Ouverture
- 400: : Elément de transparence
- 500: : Couche adhésive
- 600: : Rouleau de mousse adhésive

## Revendications

1. Elément lumineux (100) pour pièce de carrosserie de véhicule **caractérisé en ce qu'**il comporte :
- un substrat (200) à base de matière polymère apte à fixer l'élément lumineux (100) sur une pièce de carrosserie ;
- une nappe de fibres optiques (300) comportant une zone active (310) qui diffuse la lumière ; et
- un élément de transparence (400) apte à laisser passer au moins partiellement la lumière issue de la zone active (310) de la nappe de fibres optiques (300) ;
le substrat (200) et l'élément de transparence (400) encapsulant de façon étanche la zone active (310) de la nappe de fibres optiques (300).

2. Elément lumineux (100) selon la revendication précédente, dans lequel le substrat (200) est apte à épouser un relief de pièce de carrosserie sur lequel l'élément lumineux (100) est destiné à être fixé.

3. Elément lumineux (100) selon la revendication précédente, dans lequel le substrat (200) possède une propriété de conformabilité.

4. Elément lumineux (100) selon l'une des revendications précédentes, dans lequel la matière polymère est choisie seule ou en combinaison parmi les matières suivantes : une mousse (210), un élastomère, une matière polymère chargée d'élastomère, une feuille métallique.

5. Elément lumineux (100) selon l'une des revendications précédentes, dans lequel le substrat (200) à base de matière polymère possède une épaisseur telle que le substrat (200) est apte à s'adapter à un relief de pièce de carrosserie sur lequel l'élément lumineux (100) est destiné à être fixé.

6. Elément lumineux (100) selon l'une de revendications précédentes, dans lequel le substrat (200) comprend une couche adhésive (500) qui est disposée en regard de l'élément de transparence (400).

7. Elément lumineux (100) selon l'une des revendications précédentes, dans lequel le substrat (200) comporte un logement (220) accueillant la zone active de la nappe de fibres optiques (310), l'élément de transparence (400) étant en contact avec le substrat (200) sur des bords du logement (220).

8. Elément lumineux (100) selon l'une des revendications précédentes, dans lequel la nappe de fibres optiques (300) comporte en outre de la zone active (310) une zone passive (320) qui guide la lumière, et une connectique (330) permettant de relier la zone passive (320) à une source lumineuse.

9. Elément lumineux (100) selon la revendication précédente, dans lequel la zone passive (320) forme un toron (340).

10. Elément lumineux (10) selon la revendication précédente, dans lequel la nappe de fibres optiques (300) comporte une zone de transition (350) entre la zone active (310) d'une part et le toron (340) d'autre part.

11. Elément lumineux (100) selon la revendication précédente, dans lequel le toron (340) et la zone de transition (350) sont entourés d'une gaine (360), par exemple une gaine thermorétractable.

12. Ensemble d'une pièce de carrosserie pour véhicule et d'un élément lumineux (100) selon l'une des revendications précédentes, dans lequel l'élément de transparence (400) est fixé sur la pièce de carrosserie et le substrat (200) fixe la nappe de fibres optiques (300) sur l'élément de transparence.

13. Ensemble d'une pièce de carrosserie pour véhicule et d'un élément lumineux (100) selon l'une des revendications 1 à 11, dans lequel le substrat (200) comprend une seconde couche adhésive (500) disposée à la surface opposée à la nappe de fibres optiques (300) dudit substrat (200) en regard de la pièce de carrosserie.
